(19) Europäisches Patentamt
European Patent Office
Office européen des brevets

(11) EP 1 268 490 B1

(12) **EUROPEAN PATENT SPECIFICATION**

(45) Date of publication and mention of the grant of the patent:
**26.01.2005 Bulletin 2005/04**

(21) Application number: **01923627.2**

(22) Date of filing: **01.03.2001**

(51) Int Cl.[7]: **C07F 5/02**, C07B 47/00, B01J 31/22

(86) International application number:
**PCT/EP2001/002406**

(87) International publication number:
**WO 2001/064688 (07.09.2001 Gazette 2001/36)**

(54) **SELECTIVE, CATALYTIC, THERMAL FUNCTIONALIZATION OF SECONDARY OR AROMATIC C-H BONDS IN CYCLIC HYDROCARBONS**

SELEKTIVE, KATALYTISCHE UND THERMISCHE FUNKTIONALISIERUNG VON SEKUNDÄREN ODER AROMATISCHEN C-H BINDUNGEN IN ZYKLISCHEN KOHLENWASSERSTOFFEN

FONCTIONNALISATION THERMIQUE, CATALYTIQUE ET SELECTIVE DE LIAISONS HYDROCARBURES CYCLIQUES C-H SECONDAIRES OU AROMATIQUES

(84) Designated Contracting States:
**AT BE CH CY DE DK ES FI FR GB GR IE IT LI LU MC NL PT SE TR**

(30) Priority: **01.03.2000 US 516896**

(43) Date of publication of application:
**02.01.2003 Bulletin 2003/01**

(60) Divisional application:
**04101971.2 / 1 500 659**

(73) Proprietors:
- **SHELL INTERNATIONALE RESEARCH MAATSCHAPPIJ B.V.**
  **2596 HR Den Haag (NL)**
- **YALE UNIVERSITY**
  **New Haven Connecticut 06520 (US)**

(72) Inventors:
- **CHEN, Huiyuan**
  **New Haven, CT 06511 (US)**
- **HARTWIG, John, F.**
  **New Haven, CT 06511 (US)**
- **SEMPLE, Thomas, Carl**
  **Friendswood, TX 77546 (US)**

(56) References cited:
- **WALTZ, KAREN M. ET AL: "Selective functionalization of alkanes by transition-metal boryl complexes" SCIENCE (WASHINGTON, D. C.), vol. 277, no. 5323, 1997, pages 211-213, XP002165759 cited in the application**
- **IVERSON, CARL N. ET AL: "Stoichiometric and Catalytic B-C Bond Formation from Unactivated Hydrocarbons and Boranes" J. AM. CHEM. SOC., vol. 121, no. 33, 1999, pages 7696-7697, XP002165760**
- **WALTZ, KAREN M. ET AL: "C - H Activation and Functionalization of Unsaturated Hydrocarbons by Transition-Metal Boryl Complexes" ORGANOMETALLICS, vol. 18, no. 17, 1999, pages 3383-3393, XP002165761**
- **WALTZ, KAREN M. ET AL: "Functionalization of Alkanes by Isolated Transition Metal Boryl Complexes" J. AM. CHEM. SOC., vol. 122, no. 46, 2000, pages 11358-11369, XP002165762**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Field of the Invention

The field of the invention pertains to the selective functionalizing of a cyclic hydrocarbon at its secondary or aromatic C-H site by thermally reacting a functionalizing reagent and the cyclic hydrocarbon in the presence of a transition metal catalyst.

### Background of the Invention

Several years ago, it was reported in K.M. Waltz, C.N. Muhoro, J.F. Hartwig, Organometallics, 1999, 21 and in K. Waltz, J.F. Hartwig, Science 1997, 277, 211, that low valent transition metal complexes containing boryl ligands reacted with linear and cyclic hydrocarbons by photochemical dissociation of ligand to produce functionalized hydrocarbons. It was reported that organoboronate esters were formed in a stoichiometric fashion by the regiospecific replacement of one hydrogen on a terminal position with a boryl group. It was also reported in H.Chen, J.F. Hartwig, Angew.Chem.Int.Ed.Engl 1999 that commercially available $R_2BBR_2$ ($R_2$=pinacolate) reagents and substituted cyclopentadienyl (Cp*) $Re(CO)_3$ would catalytically convert alkanes to alkylboronate esters under photochemical reaction conditions. Photochemical processes, however, are impractical at an industrial scale.

It is desirable to functionalize a cyclic hydrocarbon at its secondary or aromatic C-H site. It is also desirable that the process for the functionalization occur thermally rather than through other means such as photochemical processes. It is also an object of the invention to manufacture a functionalized cyclic hydrocarbon by a process which is catalytic rather than stoichiometric in metal.

Carl Iverson et al: "Stoichiometric and Catalytic B-C bond formation from Unactivated Hydrocarbons and Boranes", J. Am. Chem. Soc., vol. 121, no. 33, 1999, pages 7696-7597 discloses the borylation of benzene according to the following equation:

$$C_6H_6 + HBPin \rightarrow C_6H_5Bpin + H_2$$

The reaction is carried out in the presence of an iridium catalyst of formula

$$Cp^*Ir(PMe_3)(H)(Bpin) \text{ (where } Cp^* = C_5Me_5)$$

### Summary of the Invention

There is now provided a process for the catalytic coupling of cyclic hydrocarbons with certain reagents under thermal conditions to functionalize the cyclic hydrocarbon at its secondary or aromatic C-H site.

In accordance with the present invention, there is provided a process for functionalizing a cyclic hydrocarbon at a secondary or aromatic C-H cyclic hydrocarbon bond, comprising thermally reacting a functionalizing reagent and the cyclic hydrocarbon in the presence of a catalyst, said catalyst comprising:

a) a source of rhodium;
b) a source of a 3 to 8, cyclic or non-cyclic, aromatic or non-aromatic, neutral, cationic or anionic, substituted or unsubstituted, electron donor moiety which does not dissociate under thermal reaction conditions; and
c) a source of ligands capable of formally donating an electron pair to rhodium and which dissociate thermally;

and wherein said functionalizing reagent comprises a source of boron, and further wherein the catalyst turns over 50 times or more.

Preferably, the cyclic hydrocarbon comprises a cycloparaffin. More preferably, said b) moiety:

(i) lacks aromatic C-H bonds on the moiety directly bonded to the rhodium, or
(ii) contains sterically hindered aromatic C-H bonds on the moiety directly bonded to the rhodium.

In another embodiment, there is provided a catalytic process having more than 50 turnovers comprising thermally activating said catalyst in the presence of a functionalizing reagent and a cyclic hydrocarbon comprising an aromatic compound or a cycloparaffin compound lacking primary C-H bonds, said catalyst comprising:

a) a source of a transition metal;
b) a source of a 3 to 8, cyclic or non-cyclic, aromatic or non-aromatic, neutral, cationic or anionic, substituted or unsubstituted, electron donor moiety which does not dissociate under thermal reaction conditions, and
c) a source of ligands capable of formally donating an electron pair to the transition metal a) and which dissociate thermally;
and wherein said functionalizing reagent comprises a source of B, C, N, O, Si, P, S, Ge, As, Al, or Se, said cyclic hydrocarbon preferably comprising a cycloparaffin compound lacking primary C-H bonds,
and said moiety (b) preferably

(i) lacking aromatic C-H bonds on the moiety directly bonded to the transition metal, or
(ii) containing sterically hindered aromatic C-H bonds on the moiety directly bonded to the transition metal.

In yet another embodiment of the present invention, there is provided a functionalization process comprising functionalizing a cyclic hydrocarbon composition comprising aromatic compounds or cycloparaffins lacking primary C-H bonds, in the presence of a thermally activated catalyst and a functionalizing reagent comprising a source of boron, wherein said process turns over the catalyst 50 or more times and at least 80% of the functionalizing reagent is converted.
Preferably, the catalyst composition used in the process of the present invention is comprised of, or obtained by combining a source of the following in any sequence:

a) a source of a transition metal;
b) a source of a 3 to 8, cyclic or non-cyclic, aromatic or non-aromatic, neutral, cationic or anionic, substituted or unsubstituted, electron donor moiety which does not dissociate under thermal reaction conditions, and when the cyclic hydrocarbon is a cycloparaffin, said moiety

(i) lacks aromatic C-H bonds on the moiety directly bonded to the transition metal, or
(ii) contains sterically hindered C-H bonds on the moiety directly bonded to the transition metal; and

c) a source of ligands comprising trialkylsilanes, unsaturated aliphatic compounds, $\pi$ allyl compounds, or $\pi$ arene compounds, provided that when the cyclic hydrocarbon is a cycloparaffin, the $\pi$ arene compounds

(i) lack aromatic C-H bonds on the moiety directly bonded to the transition metal, or
(ii) contain sterically hindered aromatic C-H bonds on the moiety directly bonded to the transition metal.

The process of the present invention preferably employs a catalyst composition comprised of, or obtained by combining a source of the following in any sequence:

a) Rh or Ir;
b) a fully substituted cyclic $C_5$ moiety having a $\pi$-coordinated electronic structure and lacking aromatic C-H bonds; and
c) ligands comprising aliphatic unsaturated or $\pi$ arene compounds, provided that when the cyclic hydrocarbon comprises a cycloparaffin, the $\pi$ arene compounds

(i) lack aromatic C-H bonds on the moiety directly bonded to the transition metal, or
(ii) contain sterically hindered aromatic C-H bonds on the moiety directly bonded to the transition metal.

There is further provided a process for functionalizing a cyclic hydrocarbon composition comprising contacting a cyclic hydrocarbon comprising aromatic compounds or cycloparaffins lacking primary C-H bonds at their aromatic or secondary C-H bond sites, respectively, with a functionalizing reagent in the presence of a thermally activated catalyst, wherein at least 80% of the functionalizing reagent is converted, and wherein the functionalizing reagent comprises a compound containing a moiety represented by the following structure:

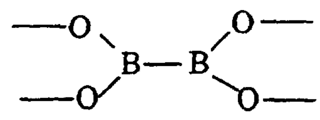

Detailed Description of the Invention

The process of the present invention is capable of converting 80% or more of the functionalizing reagent to a reaction product of the functionalizing reagent and the cyclic hydrocarbon. In particular, the process of the present invention functionalizes the secondary or aromatic C-H bonds on cyclic hydrocarbon molecules with the functionalizing reagent at high conversion, is catalytic, and relies on thermal rather than photolytic or photochemical processes to supply the activation energy required for dissociating the ligand from the catalyst. The process of the present invention also does not require the presence of a sacrificial hydrogen acceptor to obtain high conversion and catalytic activity. The reaction proceeds in a straightforward manner in that a cyclic hydrocarbon, a catalyst, and a functionalizing reagent are contacted in a reaction vessel and heated to a temperature effective to activate the reaction towards the functionalization of the cyclic hydrocarbon on at least one of its secondary or aromatic C-H bond sites. The nature of the catalyst and functionalizing reagent as described in further detail below enable one to thermally manufacture a cyclic hydrocarbon functionalized at its secondary or aromatic C-H bond site.

In the process of the present invention, the cyclic hydrocarbon is functionalized in the presence of a catalyst and a functionalizing reagent. The catalyst used in the reaction must be one which is capable of being thermally activated. By thermal activation of the catalyst is meant the process of dissociating a c)ligand from a metal centre by application of heat below the temperature at which the Z ligand (described below) dissociates from the metal centre, and at least above the temperature of the environment at which the functionalizing reagent is stored.

A useful screening test to determine whether a catalyst is one which is capable of being activated thermally is to conduct the reaction in the dark.

Although other compounds which chemically react to assist the dissociation of the c) ligand may be used along with the catalyst in the process of functionalizing a hydrocarbon, the catalyst used in the process must be of a type which is capable of being thermally activated in the absence of any compound which chemically reacts with the reagent to assist the activation of the reagent.

Accordingly, a process which applies heat in addition to other activation mechanisms, such as chemical or photolytic means, and successfully activates the catalyst is nevertheless a process within the scope of the present invention if the particular catalyst is capable of thermally functionalizing the hydrocarbon at a secondary or aromatic C-H bond in the absence of a co-catalyst or photons.

Other published systems for activating hydrocarbons at a C-H bond require the presence of a sacrificial olefin to achieve high catalyst turnover numbers. An advantage of the process of the present invention is that a sacrificial hydrogen acceptor is not required to provide a catalytic process with high turnover. Hydrogen released from the C-H hydrocarbon bond does not readily react with the functionalized hydrocarbon under reaction conditions. Although the presence of hydrogen acceptors are not excluded from the present invention, the process of the present invention is capable of achieving high turnover numbers in the absence of a sacrificial hydrogen acceptor.

By a "functionalizing reagent" is generically meant to include any compound as described below which operates to functionalize a cyclic hydrocarbon's secondary or aromatic C-H bond, and is not meant to define the reaction mechanism, efficiency, or fate of the reagent compound itself.

By "functionalized" is meant the replacement of H at a secondary or aromatic C-H bond site on the cyclic hydrocarbon with the functionalizing reagent residue. A secondary C-H bond is any bond between a hydrogen atom and any carbon atom bearing one additional hydrogen atom. These bonds are present on cycloparaffin compounds. An aromatic C-H bond is any bond between a hydrogen atom and the carbon atom in the aromatic nucleus. It is to be understood that a "bond" as used throughout the specification means a covalent bond, a complex, a coordination, or any other form of a linkage between the stated atoms.

The cyclic hydrocarbons used in the process of the present invention are saturated or unsaturated, branched or unbranched, substituted or unsubstituted cyclic compounds selected from aromatic or cycloparaffin compounds, provided that the cycloparaffin compounds do not have an alkyl branch containing primary C-H bond sites. Aromatic compounds may contain alkyl branches with primary C-H bond sites since the aromatic secondary C-H bonds are more reactive and will preferentially functionalize with the functionalizing reagent over the primary C-H bond sites on an alkyl branch. A primary C-H bond site is a bond between a hydrogen atom and any carbon atom bearing two or more additional hydrogen atoms. The cyclic hydrocarbons may be used singly or in mixture.

The cyclic hydrocarbons may be substituted with one or more substituents selected from halogen, alkoxy, amino and nitro. The cyclic hydrocarbon may contain heteroatoms within the cyclic hydrocarbon chain, such as oxygen or nitrogen. However, the number of heteroatoms is no more than 1 heteroatom for every 3 carbon atoms, preferably no more than 1 heteroatom for every 6 carbon atoms, and more preferably the cyclic hydrocarbon is free of heteroatoms.

Examples of suitable aromatic compounds include benzene, toluene, o-, m-, p- xylene or a mixture of xylene isomers, 1,3,5-trimethylbenzene(mesitylene) and other isomers of trimethylbenzene,'or a mixture thereof, 1,2,4,5 tetramethylbenzene(durene) or other isomers of tetramethylbenzene(isodurene) or a mixture thereof, ethylbenzene, 1,2-, 1,3- or 1,4-diethylbenzene or a mixture of said isomers, n-propylbenzene, 1,2-, 1,3- or 1,4-dipropylbenzene, n-butylbenzene or a mixture of various alkyl substituted benzenes, chlorotoluene, dichlorotoluene, naphthalene, tetralin, anthracene, phenanthrene, chlorobenzene, dichlorobenzene, bromobenzene, dichlorobenzene, dichlorodibromobenzene, chloronaphthalene, aniline, 4,4'-methylenebis(aniline), phenol, catechol, 4-nitrobenzyl iodide, 2,6-dichlorobenzyl bromide, 4-chlorobenzyl chloride, 3-chlorobenzyl chloride, 4-chloro-2-nitrobenzyl chloride, 2-chloro-6-fluorobenzyl chloride, 3-bromobenzyl bromide, 2-bromobenzylbromide, pyridine, or mixtures thereof. Preferred aromatic compounds comprise benzene, toluene, o-, m-, p-xylene, phenol, pyridine and aniline.

Examples of suitable cycloparaffin compounds which do not contain any alkyl groups with primary C-H bond sites include cyclopropane, cyclobutane, cyclopentane, cyclohexane, cycloheptane, cyclooctane, cyclononane, or mixtures thereof.

The catalyst used in the process of the present invention comprises:

a) a source of a transition metal, preferably rhodium;
b) a source of a 3 to 8, cyclic or non-cyclic, aromatic or non-aromatic, neutral, cationic or anionic, substituted or unsubstituted, electron donor moiety which does not dissociate under thermal reaction conditions,
c) a source of ligands capable of formally donating an electron pair to the transition metal a) and which dissociate thermally.

Preferably, the source of c) ligands comprise trialkylsilanes, unsaturated aliphatic compounds, π allyls, or n arene compounds, provided that when the cyclic hydrocarbon comprises a cycloparaffin as described herein, the π arene compounds

(i) lack aromatic C-H bonds on the moiety directly bonded to the transition metal, or
(ii) contain sterically hindered aromatic C-H bonds on the moiety directly bonded to the transition metal.

When the cyclic hydrocarbon to be functionalized is the cycloparaffin described herein, the b) moiety in the catalyst:

(i) lacks aromatic C-H bonds on the moiety directly bonded to the transition metal, or
(ii) contains sterically hindered aromatic C-H bonds on the moiety directly bonded to the transition metal.

In an embodiment of the present invention, the catalyst can be conveniently represented by any one of the following structures:

(i) 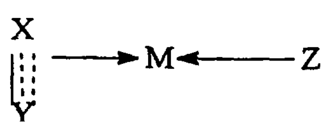

(ii) 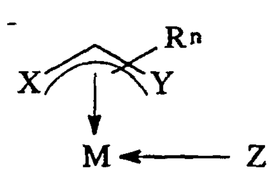

(iii) $R_nX: \rightarrow M \leftarrow Z$

wherein X and Y together represent the c) ligands bonded directly or indirectly to M, and wherein X and Y may be

bridged to form a cyclic arene compound which may contain branches, substituents, or fused aromatic rings; M represents the a) transition metal centre; Z represents a cyclic or non-cyclic, aromatic or non-aromatic, neutral, cationic or anionic, substituted or unsubstituted compound having a $\pi$-coordinated electronic structure, and when the hydrocarbon to be functionalized is a cycloparaffin, Z lacks aromatic C-H bonds on the moiety which will directly bond to the transition metal a), R represents one or more optional substituents or branches, and n represents an integer ranging from 0 to 8. One or more of the ligands are bonded to the M metal centre, and preferably more than one ligand is bonded to the metal centre M. It is not critical to the present invention that either the nature or location of the linkage between the ligands to the metal centre be known, so long as some form of a linkage between the X or the X and Y ligands and the metal centre exists at a position which will provide a catalyst which is effective to functionalize C-H bonds on the cyclic hydrocarbon molecule.

Suitable transition metals a) (or M) include transition metals in the 0, +1,+2, +3, +4, +5, or +6 oxidation state. It is preferred to employ a transition metal that is capable of traversing 2 or more formal oxidation states, more preferably 4 or more formal oxidation states. Examples of suitable transition metals include Fe, Co, Ni, Rh, Ru, Os, Pt, Pd, Mn, Re, W, Cr, Mo, Ir, and the metals from the lanthanide and actinide series. Preferred metals are Re, Rh, and Ir. More preferred are Rh and Ir, and most preferred is Rh to improve the reaction rate over Ir and to improve the conversion of the functionalizing reagent to the cyclic hydrocarbon-functionalizing reagent adduct and other byproducts. It is generally believed that Ir transition metal centres promote faster reaction rates and more completely convert C-H bonds than Rh using equivalent ligands and reaction conditions. Surprisingly, however, we have found that the reaction rate using Rh as a transition metal centre to convert the functionalizing reagent to the functionalized cyclic hydrocarbon was faster and more complete than its Ir counterpart. Accordingly, in a most preferred embodiment, the transition metal is Rh.

The catalyst used in the process of the present invention also comprises a source of a 3 to 8, cyclic or non-cyclic, aromatic or non-aromatic, neutral, cationic or anionic, substituted or unsubstituted, electron donor moiety which does not dissociate under thermal reaction conditions, and when the cyclic hydrocarbon to be functionalized is a cycloparaffin, said moiety

(i) lacks aromatic C-H bonds on the moiety directly bonded to the transition metal, or
(ii) contains sterically hindered aromatic C-H bonds on the moiety directly bonded to the transition metal;

The Z moiety depicted in the structural diagrams above (corresponding to the b) moiety) is a 3-8 electron donor ligand which does not dissociate under thermal reaction conditions. Thermal reaction conditions are all the physical reaction conditions employed in practice to functionalize the cyclic hydrocarbon at its secondary or aromatic C-H bond site, including but not limited to the pressure, temperature, and space velocity conditions within the reaction vessel. Dissociation of the Z moiety results in the degradation of the catalyst, thereby terminating its activity.

The Z moiety also donates electron density to stabilize the oxidation state of the transition metal of the active catalyst. Preferably, the electronic charge of the Z moiety will fully stabilize the metal centre depending upon the oxidation state of the metal centre M in its active state.

The Z moiety may be between an $\eta^2$ and an $\eta^8$ complexed cyclic or non-cyclic, aromatic or non-aromatic, neutral cationic or anionic, substituted or unsubstituted ligand. It is preferably a $\pi$ coordinated, cyclic aromatic compound fully substituted, and more preferably a cyclic, fully substituted aromatic, anionic moiety. The Z moiety preferably comprises a fully substituted $\eta^5$-$\eta^6$ cyclic moiety having a 5-8 carbon membered ring. The Z moiety preferably comprises a fully substituted $\eta^5$ cyclopentadienyl moiety. Said $\eta^5$ cyclopentadienyl moiety is preferably a $\eta^5$ pentamethylcyclopentadienyl moiety. In one embodiment, the Z compound is a fully substituted cyclic $\eta^5$ 5-8 carbon membered ring.

The Z moiety may be coordinated to the M metal centre in several different isomeric configurations. For example, the Z moiety in the $\eta^5$ configuration may be in one of the S, W, or U isomeric states. In a more preferred embodiment, the Z moiety is the U isomer in the $\eta^5$ bonded configuration. It is to be understood that the original position of the double bonds of a dienyl ligand need not be identified because of the delocalization effect. For example, an $\eta^5$-1,3-pentadien-3-yl group is identical to the $\eta^5$-1,4-pentadien-3-yl group. It is to be further understood that all isomeric forms of Z moieties are included in any reference to a Z moiety identified herein. Furthermore, it is not critical to the present invention that either the nature of the linkage between the Z moiety and the metal centre, or the carbon number to which the Z moiety is coordinated, bonded, or complexed to the metal centre, be known, so long as some form of a linkage between the Z moiety and the metal centre exists at a position which will provide a functionalizing reagent which is effective to functionalize a secondary or aromatic C-H bond.

The Z moiety must lack aromatic C-H bonds on the moiety directly bonded to the transition metal, or contain sterically hindered aromatic C-H bonds on the moiety directly bonded to the transition metal. An aromatic C-H bond is a bond between a hydrogen atom and one of the carbon atoms forming the aromatic ring. The presence of sterically accessible aromatic C-H bonds on the moiety which will directly bond to the transition metal a) is undesirable when functionalizing the cycloparaffins described herein because they compete with the functionalization of the secondary

C-H cycloparaffin bonds, thereby reducing the yield of functionalized cycloparaffin. Accordingly, when a cycloparaffin is to be functionalized, the Z moiety should either altogether lack aromatic C-H bonds on the moiety directly bonded to the transition metal, or if such aromatic C-H bonds are present, they should be sterically inaccessible by other activated catalyst molecules in the vicinity to minimize or avoid functionalizing the Z moiety aromatic C-H sites.

In a more preferred embodiment, every site on the Z moiety, including those sites which are directly and only indirectly bonded to the transition metal through a substituent on the Z moiety directly bonded to the transition metal, are either lacking in any aromatic C-H bonds or contain sterically hindered C-H sites.

It will be appreciated that suitable substituents are bulky groups which are generally regarded as sterically demanding. Non-limiting examples of such bulky substituents on aromatic ring carbon atoms adjacent to the aromatic C-H site include hydrocarbyl, hydrocarbyl substituted metalloid radicals wherein the metalloid is selected from Group IV A of the Periodic Table, silyl, germyl, cyano, hydroxyl, amino, and halo groups, such as fluorine or chlorine, especially fluoro or fluoroalkyl groups, aryl, phenyl which optionally may bear one or more of the same or different substituents, alklaryl, alkoxy, phenoxy, phenylalkoxy, benzyl, bulky substituents containing one or more hetero atoms such as tri (lower alkyl)silyl, $-NPh_2$, -NHPh, $-BPh_2$, and $-B(OPh)_2$, and carboxylic acid esters.

Any of the Z moiety substituents may be joined together on the Z moiety to form a $C_4$-$C_{20}$ saturated ring. Examples of hydrocarbyl groups include $C_1$-$C_{20}$ branched or unbranched alkyl groups, preferably $C_1$-$C_6$ branched or unbranched alkyl groups such as methyl, ethyl, isopropyl, propyl, butyl, t-butyl, isobutyl, neopentyl, and 3-phenyl-neopentyl. Other examples of hydrocarbyl groups include the $C_1$-$C_{20}$ substituted radicals, optionally where one or more of the hydrogen atoms may be replaced with a halogen radical, an amido radical, a phosphino radical, and an alkoxy radical or any other radical containing a Lewis acidic or basic functionality.

It is preferred that the substituent donate electron density to the ligand. Such substituents generally contribute to increasing the thermal stability of the catalyst under reaction conditions with the cyclic hydrocarbon, as well as increasing the activity of the catalyst.

Examples of preferred substituents comprise trimethylsilyl and $C_1$-$C_4$ branched or unbranched alkyl groups, such as methyl, isopropyl, t-butyl.

The number of substituents is sufficient to create a fully substituted Z moiety or sufficiently substituted to sterically protect the remaining aromatic C-H bonds. The aromatic carbon atoms which are substituted include those carbon atoms in aromatic nuclei fused to an aromatic ring bonded directly to the metal centre M, as well as the aromatic nuclei indirectly tethered to the transition metal through the non-dissociating electron donating atoms directly bonded to the transition metal.

Examples of b) moieties (equivalent to the Z moieties) suitable for functionalizing the aromatic and cycloparaffin hydrocarbons described herein include, but are not limited to, methylcyclopentadiene; ethylcyclopentadiene; t-butylcyclopentadiene; hexylcyclopentadiene; octylcyclopentadiene; 1,2-dimethylcyclopentadiene; 1,3-dimethylcyclopentadiene; 2,4-dimethyl-$\eta^5$ -pentadien-1-yl; 1, 5-dimethyl-$\eta^5$ - pentadien-2-yl; 2,4-dimethyl-$\eta^5$ -pentadien-3-yl, 1; 5-dimethyl- $\eta^5$ -pentadien-3-yl; 1,2,4-trimethylcyclopentadiene; pentamethylcyclopentadiene; 1, 5-bis(trimethylsilyl)-$\eta^5$ -pentadien-3-yl; 1,2,3,4-tetramethylcyclopentadiene; 1, 2, 6, 6-tetramethyl-$\eta^5$-cyclohexadien-4-yl; 1,2,4,6,6-pentamethyl-$\eta^5$-cyclohexadien-3-yl; 1, 2, 4, 6, 6-pentamethyl-$\eta^5$-cyclohexadien-5-yl; 1, 2, 5, 6, 6-pentamethyl-$\eta^5$-cyclohexadien-4-yl; 1, 2, 4, 5, 6, 6-hexamethyl-$\eta^5$-cyclohexadien-3-yl; 1,2, 4, 5-tetramethyl-6, 6-cyclotrimethylene-$\eta^5$ -cyclohexadien-3-yl; 1, 2-dihydronaphthalen-1-yl; 1, 2-dihydronaphthalen-2-yl; 1,1-dimethyl-1,2-dihydronaphthalen-2-yl; 1, 1-dimethyl-1,2-dihydronaphthalen-4-yl; diphenylmethyl- di(1-cyclohexenyl)methyl; 1, 1-dimethyl-1,2, 5, 6, 7, 8-hexahydronaphthalen-4-yl; 1, 1-dimethyl-1,4, 5, 6, 7, 8-hexahydronaphthalen-4-yl; 1, 1-dimethyl-1,5, 6, 7, 8, 9-hexahydronaphthalen-4-yl; 1,1,2,3-tetramethyl-1,2, 5, 6, 7, 8-hexahydronaphthalen-4-yl; 1,1,2,3-tetramethyl-1,4, 5, 6, 7, 8-hexahydronaphthalen-4-yl; 1, 1,2, 3-tetramethyl-1, 5, 6, 7, 8, 9-hexahydronaphthalen-4-yl; 9, 10-dihydroanthracen-9-yl; 9,10-dihydroanthracen-1-yl; 9, 9-dimethyl-9, 10-dihydroanthracen-10-yl; 1,2,3,4,9, 10-hexahydroanthracen-9-yl; 1,2, 3, 4, 9,10-hexahydroanthracen-1-yl; 1,2, 3, 4, 9, 11-hexahydroanthracen-9-yl; 1,4, 5, 8, 9, 10-hexahydroanthracen-1-yl; 9, 9-dimethyl-1,4, 5, 8, 9, 10-hexahydroanthracen-10-yl; 9, 9-dimethyl-1,4, 5, 8, 9, 10-hexahydroanthracen-2-yl; 8, 8-dimethyl-1,4, 5, 8, 9,10-hexahydroanthracen-10-yl; 1,2, 3, 4, 5, 6, 7, 8, 9,10-decahydroanthracen-9-yl; 1,2, 3, 4, 5, 6, 7, 8, 9,11-decahydroanthracen-9-yl; 9, 9-dimethyl-1,2, 3, 4, 5, 6, 7, 8, 9,10-decahydroanthracen-10-yl; 9, 9-dimethyl-1,2, 3, 4, 5, 6, 7, 8, 9,11-decahydroanthracen-10-yl; 4,7-dimethylindene; 4,5,6,7-tetrahydroindene; 3-methylcyclopentadienylsilane; 1,2-dimethylcyclopentadienylsilane; 1,3-dimethylcyclopentadienylsilane; 1,2,4-trimethylcyclopentadienylsilane; 1,2,3,4-tetramethylcyclopentadienylsilane; pentamethylcyclopentadienylsilane; 1,2,4-trimethylindenylsilane; 1,2,3,4-tetramethylindenylsilane; and pentamethylindenylsilane and each of their equivalent ligands. Other Z moieties include the fully substituted or sterically hindered substituted moieties of the compounds identified in US-A-5 541 349 as the L ligand therein.

In addition to the above mentioned Z moieties, the following moieties are also suitable for functionalizing the aromatic hydrocarbons described herein. These include, but are not limited to, pentadienyl, cyclopentadienyl, cyclohexadienyl, cyclosiladienyl, cycloheptadienyl, cyclooctadienyl, anthracenyl, and naphthalenyl groups. More specific examples include cyclopentadiene, indene, 4-methyl-1-indene, 4,7-dimethylindene, 4,5,6,7-tetrahydroindene; cycloheptatriene, methylcycloheptatriene, cyclooctatetraene, methylcyclooctatetraene, azulene, methylazulene, ethylazulene, fluorene, methylfluorene, monocyclopentadienylsilane, biscyclopentadienylsilane, triscyclopentadienylsilane, tetrakiscyclopentadienylsilane, biscyclopentadienylmonomethylsilane, biscyclopentadienylmonoethylsilane, biscyclopentadienyldimethylsilane, biscyclopentadienyldiethylsilane, biscyclopentadienylmethylethylsilane, biscyclopentadienyldipropylsilane, biscyclopentadienylethylpropylsilane, biscyclopentadienyldiphenylsilane, biscyclopentadienylphenylmethylsilane, biscyclopentadienylmonomethoxysilane, biscyclopentadienylmonoethoxysilane, triscyclopentadienylmonomethylsilane, triscyclopentadienylmonoethylsilane, triscyclopentadienylmonomethoxysilane, triscyclopentadienylmonoethoxysilane, monoindenylsilane, bisindenylsilane, trisindenylsilane, tetrakisindenylsilane, monoindenylmonomethylsilane, monoindenylmonoethylsilane, monoindenyldimethylsilane, monoindenyldiethylsilane, monoindenylmonomethoxysilane, monoindenylmonoethoxysilane, monoindenylmonophenoxysilane, bisindenylmonomethylsilane, bisindenylmonoethylsilane, bisindenyldimethylsilane, bisindenyldiethylsilane, bisindenylmethylethylsilane, bisindenyldipropylsilane, bisindenylethylpropylsilane, bisindenyldiphenylsilane, bisindenylphenylmethylsilane, bisindenylmonomethoxysilane, bisindenylmonoethoxysilane, trisindenylmonomethylsilane, trisindenylmonoethylsilane, trisindenylmonomethoxysilane, trisindenylmonoethoxysilane, 3-methylindenylsilane, bis-3-methylindenylsilane, 3-methylindenymethylsilane, 1,2-dimethylindenylsilane and 1,3-dimethylindenylsilane.

When Z is cyclic, the ring may optionally be comprised of heteroatoms, such as nitrogen or oxygen. Z can be a 4-50 member non-hydrogen atom group, preferably a 4-10 membered fully substituted cyclic moiety or a sterically hindered moiety comprised of a single or fused ring system. Examples of any of the above compounds bonded through an alkylene group (usually 2 to 8, preferably 2 to 3, carbon atoms) are suitable as the Z moiety. Examples of such compounds include bis(4,5,6,7-tetrahydro-1-indenyl)ethane, 1,3-propanedinylbisindene, 1,3-propanedinylbis(4,5,6,7-tetrahydro)indene, propylenebis(1-indene), isopropyl(1-indenyl)cyclopentadiene, diphenylmethylene(9-fluorenyl)cyclopentadiene, isopropylcyclopentadienyl-1-fluoreneisopropylbiscyclopentadiene.

A mixture of any of the aforementioned compounds may be used in the synthesis of the catalyst.

The Z moieties may be unsubstituted cyclopentadienyl compounds. Most preferred as the Z moieties are alkyl substituted cyclopentadienyl compounds, and in particular the $C_1$-$C_4$ alkyl substituted cyclopentadienyl compounds such as the mono, di, tri, tetra, or penta methyl, ethyl, propyl, isopropyl, or t-butyl cyclopentadienyl compounds (e.g. dimethylcyclopentadienyl, methylcyclopentadienyl, tetramethylcyclopentadienyl, diethylcyclopentadienyl, t-butylcyclopentadienyl, and pentamethylcyclopentadienyl) and the hydroxy and $C_1$-$C_4$ alkyl substituted indenyl and fluorenyl compounds, such as tetramethylindenyl, tetrahydrofluorenyl, and octahydrofluorenyl.

Some examples of cyclic Z moiety structures are represented below:

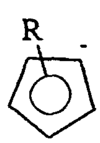 or 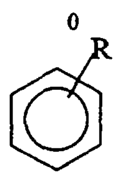 or 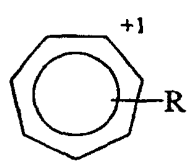 or 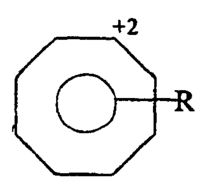

or

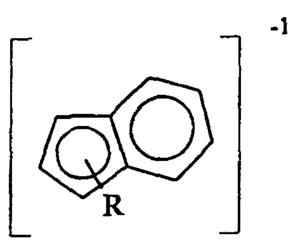

wherein Z is fully substituted with R groups or sufficient numbers of R groups to sterically hinder the aromatic C-H bonds. The number of R groups may range from 1 to 8.

The catalyst used in the process of the invention is also comprised of one or more c) ligands. The catalyst contains at least 1 c) ligand, and preferably contains 2 or more c) ligands. The c) ligand is derived from a source of

ligands capable of formally donating an electron pair to the transition metal a) and which dissociate thermally.

The c) ligand is derived from sources which donate electron density to the transition metal and which contain either a non-bonding pair of electrons or a bonding pair of electrons. By "donating" a pair of electrons is meant that the ligand does not transfer electrons to the metal, and upon dissociation, the electrons leave with the ligand. It is not necessary that the bond linkage occur between a coordinating atom and the metal centre. The bond linkage may occur between the metal centre and a π bond or a π coordinated ring, each of which can donate electron density to stabilize the oxidation state of the metal centre M, or the bond linkage may be a σ bond between a ligand atom and the transition metal centre.

The c) ligand should be one which dissociates from the catalyst upon application of thermal energy. Since it is desirable to both increase product yield and reaction rates, not all of the ligands should be of the type which are tightly held to the transition metal centre, and not all ligands should dissociate from the catalyst slowly or only at temperatures approaching the decomposition temperature of the catalyst. Accordingly, at least one of the ligands should thermally dissociate from the catalyst. By "thermally dissociating" is meant that the ligand is capable of dissociating from the metal centre using thermal energy at temperatures below the temperature at which the b) moiety dissociates from the metal centre, which would result in the degradation of the catalyst. In a preferred embodiment, the c) ligand dissociates from the metal centre a) at temperatures below 250°C and above 70°C. Evidence of thermal dissociation is to conduct the reaction in a dark room and in the absence of any co-catalyst or other ingredients beside the functionalizing reagent, the catalyst, the cyclic hydrocarbon, and a solvent.

The c) ligand preferably comprises aliphatic unsaturated or π arene compounds, said π arene compounds lacking π arene C-H bonds.

The c) ligand can be broadly represented by the following structural formulae:

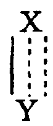

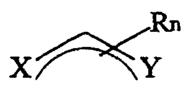

$R_nX$:

wherein X and Y each independently represent one or more of H, C, B, S, N, Si, Sn, P, and As and combinations thereof, to which saturated or unsaturated, branched or unbranched alkyl, aromatic, alicyclic, or alkaryl groups may be bonded, and wherein X and Y may be bridged to form a cyclic arene compound which may contain branches, substituents, or fused aromatic rings, R represents hydrogen or one or more optional branches or substituents, and n represents an integer ranging from 0 to 8. The unsaturation between X and Y may be olefinic, acetylenic or aromatic. However, X and Y may also be bound by a single covalent bond when X or Y is hydrogen.

An example of a fused X-Y structure is represented by a 6 membered aromatic ring as shown in the structure below:

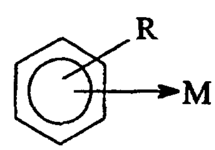

Preferred c) ligands satisfying the above criteria are derived from a source of $:PR_3$, $:NR'_3$, $HSiR_3$, unsaturated aliphatic compounds, π allyl, and π arene compounds. More preferred c) ligands comprise a source of $HSiR_3$, unsaturated aliphatic compounds, π allyl and π arene compounds. Most preferred are the unsaturated aliphatic compounds, π allyl compounds, and the π arene compounds, and especially the unsaturated aliphatic compounds and the π arene compounds.

Tertiary phosphines suitable as the c) ligand include the mono and bisphosphines. Monophosphines are represented by the formula:

$$:PR_3$$

wherein R is independently an aromatic of up to 14 carbon atoms, optionally substituted; or a $C_1$-$C_{40}$ alkyl or alicyclic group, optionally containing atoms other than carbon and hydrogen in the form of monovalent substituents which are preferably electron-withdrawing substituents such as halo, preferably the middle halogens chloro and bromo, nitro and trifluoromethyl. Examples of aromatic R' groups include phenyl, tolyl and naphthyl. The aromatic groups are optionally substituted aryl groups with halogen atoms and alkyl, aryl, alkoxy, carboxy, carbalkoxy, acyl, trihalogenmethyl, cyano, dialkylamino, sulphonylalkyl and alkanoyloxy groups.

Other specific examples of suitable phosphines are bis(1,1-dimethylethyl) phenylphosphine, dimethylphenylphosphine, cyclohexyldiphenylphosphine, dibutylphenylphosphine, methyldiphenylphosphine, triphenylphosphine, tri-n-butylphosphine, tris(4-tolyl)phosphine, tris(4-chlorophenyl)phosphine, tris(4-methoxyphenyl)phosphine, tris(3-methoxyphenyl)phosphine, tris(2-methoxyphenyl)phosphine, tris(4-butylphenyl)phosphine, tris(4-triflurophenyl)phosphine, tris(4-fluorophenyl)phosphine and 2-carboxyphenyl diphenylphosphine, tri-p-tolylphosphine, tri-p-methoxyphenylphosphine, o-diphenylphosphinobenzoic acid, and in particular triphenylphosphine, tributylphosphine, trimethylphosphine, triethylphosphine, tripropylphosphine, and any $C_1$-$C_6$ alkyl combination as an R' group, 1,2-bis (diphenylphosphino) ethane, 1,2-bis(diphenylphosphino) ethene, 1,3-bis (diphenylphosphino) propane, 1,3-bis(diethylphosphino) propane, 1,4-bis (diphenylphosphino) butane, 1,3-bis(di-isopropylphosphino) propane and 1,3-bis (di-p-methoxyphenylphosphino) propane.

Tertiary amines suitable as the c) ligand are represented by the formula:

$$:NR'_3$$

wherein R' has the same meaning as R above with respect to $:PR_3$, as well as the polyamines such as the diamines, triamine, and pentamines.

Examples of electron donating c) amine ligands include trimethylamine, triethylamine, tri-n-propylamine, triisopropylamine,tri(n-butyl)amine, tri(isobutyl)amine, N,N-dimethylaniline, tributylamine, benzyldimethylamine, tris (dimethylaminomethyl)phenol, dimethylethanolamine, n-methylmorpholine, triethylene diamine, N-methylmorpholine, N-ethylmorpholine, diethylethanol-amine, N-cocomorpholine,1-methyl-4-dimethylamino-ethylpiperazine, 3-methoxypropyldimethylamine,N,N,N'-tri-methylisopropyl propylenediamine, 3-diethylamino propyldiethylamine,dimethylbenzylamine, dimethylcyclohexylamine, 2-methylimidazole, 2-ethyl-4-methyl imidazole, 2,4,6-tris(dimethylaminomethyl) phenol, 1,4-diazabicyclo(2,2,2)-octane, 1,5-diazabicyclo(5,4,0)-undecane, dimethyldodecylamine, pyridine, 4-(1-butylpentyl)pyridine, quinoline, isoquinoline, lipdine, quinaldine, nonylpyridine, 2,6-lutidine, 2,4,6-collidine, 2-undecylimidazole, 2-heptadecylimidazole, 2-phenylimidazole, 2-ethyl-4-methylimidazole, 1-benzyl-2-methylimidazole, 1-propyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-guanaminoethyl-2-methylimidazole, N,N-dimethylaniline, N, N-dimethyltoluidine, N,N-dimethyl-p-anisidine, p-halogeno-N,N-dimethyl-aniline, 2-N-ethylanilino ethanol, tri-n-butylamine, pyridine, quinoline, N-methylmorpholine, triethanolamine, and N,N,N',N'-tetramethylbutanediamine.

The source of unsaturated aliphatic compounds as the c) ligand must contain C and H, although heteroatoms may also be present in the compound, provided that not more than 1 heteroatom for every 6 carbon atoms are present. Any aliphatic compound containing unsaturation which dissociates from the transition metal centre at a temperature lower than the temperature at which the b) moiety (Z group) dissociates, is a suitable compound for use as a ligand.

The aliphatic unsaturated compound may have from 2 to 32 carbon atoms, preferably from 2 to 8 carbon atoms, more preferably from 2 to 6 carbon atoms. The aliphatic unsaturated compound may be alicyclic or in a linear or branched non-ring structure. Mono- or poly- olefins straight or branched chain compounds are preferred, with mono-olefins being more preferred. A c) ligand comprising a linear or branched aliphatic olefinic group having from 2 to 8 carbon atoms is preferred.

Suitable unsaturated aliphatic compounds as the c) ligand include mono-olefins such as the linear olefins made by the cracking of paraffin wax, commercial olefin products manufactured by ethylene oligomerization and marketed in the United States by Shell Chemical Company under the trademark NEODENE, linear internal olefins made by the chlorination-dehydrochlorination of paraffins, by paraffin dehydrogenation, and by isomerization of alphaolefins, detergent-range internal or alpha, branched or unbranched, mono-olefins containing from about 8 to about 22 carbon atoms such as those in the carbon number range of C10 to C12, C11 to C15, C12 to C13, and C15 to C18, and ethylene, propylene, 1-butene, 2-butene, 1-pentene, 2-pentene, isopentene, hexene-1, 2-hexene, 3-hexene, 4-methylpentene-1, 2-methylpentene-1, 4-methylbutene-1, 1-heptene, 2-heptene, 3-heptene, 1-octene, 2-octene, 2-methylheptene-1, 4-octene, 3,4-dimethyl-3-hexene, 1-decene, and 1-dodecene, and so forth up to 32 carbon atoms ; dienes and trienes including butadiene, 1,3-pentadiene, 1,4-pentadiene, 1,3-hexadiene, 1,4-hexadiene, 1,5-hexadiene, 1,3-cyclohexadiene, 1,4-cyclohexadiene, 1,9-decadiene, 1,13-tetradecadiene, 2,6-dimethyl-1,5-heptadiene, 2-methyl-2,7-octadiene, 2,7-dimethyl-2,6-octadiene, 2,3-dimethylbutadiene, ethylidene norbornene, dicyclopentadiene, isoprene, 1,3,7-octaroriene, 1,5,9-decartriene, 4-vinylcyclohexene, vinylcyclohexane; divinylbenzene, and cyclic olefins including cyclopentene, cyclobutene, cyclohexene, 3-methylcyclohexene, cyclooctene, cyclodecene, cyclododecene, η5-cyclohexadienyl, η6-cycloheptatriene, η 8 -cyclooctatetracene tetracyclodecene, octacyclodecene, norbornene, 5-methyl-2-norbornene, 5-ethyl-2-norbornene, 5-isobutyl-2-norbornene, 5,6-dimethyl-2-norbornene, 5,5,6-trimethyl-2-norbornene; and acetylenic compounds such as acetylene, methylacetylene, diacetylene, 1,2-dimethylacetylene, η3-pentenyl, and norbornadiene. The aliphatic compound preferably comprises ethylene.

Sources of the π allyl compound may contain from 3 to 64 carbon atoms. The electronic configuration of the π allyl is not particularly limited, but will generally take on the $\eta^3$ state. Any π allyl which dissociates from the transition metal centre at a temperature lower than the temperature at which the b) moiety (Z group) dissociates, is a suitable compound for use as a ligand.

Specific examples of π allyl compounds include allyl acrylate, 2-propen-1-ol, allylamine, allylbromide, allyl hexanoate, allyl cyanide, allyl carbonate, 1-allyl-4-hydroxybenzene, allyl-alpha-ionone, allyl isocyanate, allyl isothiocyanate, allyl thiol, allyl methacrylate, 4-allyl-2-methoxyphenol, 4-allyl-1,2-methylenedioxybenzene, allyl pelargonate, allyl sulfide, and allyl thioureas.

The π-arene compound may contain from 5 to 64 carbon atoms, preferably from 5 to 14 carbon atoms. The electronic configuration of the π allyl and the π-arene compound is not particularly limited, and may take on the $\eta^3$, $\eta^4$, $\eta^5$, $\eta^6$, $\eta^7$, and $\eta^8$ states, and may also have any isomeric structure within each η configuration, including the W, U, and S configurations. Any π arene compound, whether substituted, fused, or bridged, which dissociates from the transition metal centre at a temperature lower than the temperature at which the b) moiety (Z group) dissociates, and which lacks aromatic C-H bonds on the moiety directly bonded to the transition metal, or contains sterically hindered C-H bonds on the moiety directly bonded to the transition metal, is a suitable compound for use as a ligand. Reference can be had to the Z moiety substituents described above to determine suitable substituents to sterically hinder the presence of aromatic C-H bonds on the c) ligand.

Suitable π arenes as the c) ligand include divinylbenzene, p-xylene, 1,3,5-trimethylbenzene (mesitylene), 1,2,4-trimethylbenzene, 1,3,5-triisopylbenzene, 1,2,3,4-tetramethylbenzene, 1,2,3,5-tetramethylbenzene, 1,2,4,5-tetramethylbenzene (durene), pentamethylbenzene, hexamethylbenzene, fluorene, dibenzostannepine, tellurophene, phenothiarsine, selenanthrene, phenoxaphosphine, phenarsazine, phenatellurazine, 1,2,3,4,4a,9a)-9-(phenylmethylidene)fluorene, and (1,2,3,4,4a,9a)-9-(3-phenyl-2-propenylidene)fluorene.

The source of c) ligand may also comprise compounds derived from polyalkylsilanes. Such silanes can be represented by the following formula:

$$R''_nSi$$

wherein R'' is hydrogen, or has the same meaning as R above with respect to suitable phosphine compounds as the c) ligand, and n is an integer ranging from 3-4, provided that the silane contains no more than two hydrogen atoms bonded to the silicon atom.

Most preferred examples of the c) ligand are represented by the following structural formulae:

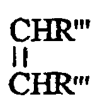

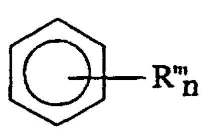

wherein each R''' independently represents hydrogen or a saturated or unsaturated, branched or unbranched alkyl, aromatic, alicyclic, or alkaryl group having from 1 to 15 carbon atoms or one or more fused ring structures, more preferably hydrogen or a saturated, branched or unbranched alkyl group having from 1 to 8 carbon atoms, most preferably from 1 to 4 carbon atoms; and n represents the number of R''' groups and is an integer ranging from 2 to 6. The electronic configuration of the aromatic radical may be in the $\eta^4$, $\eta^5$, or $\eta^6$ states.

Examples of these most preferred c) ligands include ethylene, propylene, 1-butene, 2-butene, 2-methylpropene-1, toluene, p-ethylbenzene, p-isopropylbenzene, p-propylbenzene, p-t-butylbenzene, 1,4-di-t-butylbenzene, 1,3,5-trimethylbenzene (mesitylene), 1,2,4-trimethylbenzene, 1,3,5-triisopylbenzene, 1,2,3,4-tetramethylbenzene, 1,2,3,5-tetramethylbenzene, 1,2,4,5-tetramethylbenzene (durene), pentamethylbenzene, hexamethylbenzene, and di-t-butylbenzene. Among these, ethylene and alkyl substituted $C_6$ compounds, such an tri-, tetra-, penta-, and hexa-$C_1$-$C_4$ alkyl substituted $C_6$ are particularly suitable. The c) ligand is preferably an $\eta^4$ hexamethylbenzene.

While mention has been made of employing c) ligands, any other compound known to act as a ligand may be used in addition to the c) ligand. Examples of additional ligands which may be bonded to the transition metal centre include hydrogen, CO, phosphite, alkoxy, amido, aryloxide, phosphido, arsenic radical, carbonates such as $CF_3CO_2^-$, sulfonates such as $CF_3SO_3^-$, and silyl groups.

The total sum of electrons donated by the ligands and the valence electrons possessed by the transition metal is governed by the "eighteen electron rule" in most cases. This rule states that the most stable organo-metallic compounds tend to be those compounds in which the sum of the electrons donated by the ligands and the metal is eighteen. Those skilled in the art, however, know that there are exceptions to this rule and that organo-metallic complex compounds having a sum of 16, 17, 19, and 20 electrons are also known. Therefore, organo-metallic catalysts described herein in which the complexed metal M have a total sum of 16, 17, 18, 19, or 20 electrons in the valence shell and a residual net positive charge of 1, 2 or 3 are included within the scope of the present invention.

The catalyst may be synthesized by any of the known literature methods. The halide of the metal-Z moiety can be synthesized by the methods described in C. White, A.Yates, P.M.Maitlis, Inorg. Synth. 1992, V29, 228-234. The catalyst may be manufactured by combining in any sequence, but preferably by combining c) with the reaction product of a) and b).

Commercially available Z moiety complexed metals, such as cyclopentadienyl metals, are generally complexed with a ligand other than an olefin or aromatic ligand. A typical ligand in commercially available cyclopentadienyl metal compounds is -CO. Any known method for substituting one ligand for another may be used to prepare the catalyst. The synthesis and purification of the catalyst including the ligands can be performed according to the methods described in T.M.Gilbert, R.G. Bergman, Inorg. Synth., 1990, V.27, 19-22; K.Moseley, J.W. Kang, P.M. Maitlis, J. Chem.Soc. A, 1970, 2875-83; W.J.Bowyer, J.W.Merkert, W.E.Geiger, Organometallics, 1989, V.8, 191-198; and C.White, P.M. Maitlis, J.Chem.Soc.A 1971, 3322-3326. In general, a molar ratio of Z-metal halide salt moieties to the c) ligand compound, as determined by the desired number of ligand compounds bonded to the transition metal, are mixed together in the presence of an optional solvent and acid under heat at -78°C to 100°C for a time sufficient to fully exchange the halide ligands with the c) ligands, after which the product is cooled and the acid removed by distillation under vacuum. The resulting solid may be washed with water and filtered. An aqueous source of a weakly coordinating anion such as $NH_4PF_6$ is mixed with the filtrate to precipitate the desired product, which may then be washed with more water and dried.

Examples of acids useful as agents to ionically bond the halide to the complex include $CF_3COOH$, RCOOH, $CF_3$-$SO_3H$, and other weakly coordinating acids. Examples of other anionic sources useful to precipitate the catalyst include $NH_4BF_6$, $NH_4AsF_6$, $NH_4OH$ and $NBa_4PF_6$.

The process of the present invention selectively functionalizes a cyclic hydrocarbon with a functionalizing reagent. The functionalizing reagent comprises any group having an electropositive atom capable of bonding to the metal centre M and making a strong E-C bond where E is the electropositive element. The overall reaction is between the reagent containing the electropositive element X-E and the carbon-hydrogen C-H converting to an X-H bond and a carbon-electropositive bond C-E, where X can be hydrogen, another electropositive atom, or other sacrificial portion of the molecule. The electropositive element should be chosen such that the absolute value of the C-H, X-E, C-E, and X-H bond energies satisfy the following equation:

$$C\text{-}H + X\text{-}E > C\text{-}E + X\text{-}H$$

Preferably, the functionalizing reagent comprises a source of boron. The source of boron compounds include numerous boron alkyl, boron aryl, organoboron hydride, or organoboron halide compounds that are known and/or may be prepared in a known manner. The types of boron compounds and their methods of preparation are described in "Mechanism of the Complexation of Boron Acids with Catechol and Substituted Catechols" by Pizer, R. and Babcock, L., Inorganic Chemistry, vol. 16, No. 7 pp. 1677-1681 (1977); R. K. Boeckman et al. " Catechol boron halides: ... " Tetrahedron Letter, 1985, 26, pp. 1411-1414; S.Pereira, M.Srebnik, Tetrahedron Lett. 1996, V37, 3283-3286; C.E. Tucker, J.Davidson, P.Knochel, J.Org.Chem., 1992, V.57, 3482; R.A. Bowie, O.C. Musgrave, J.Chem.Soc. 1963, 3945-3949; and Herbert C. Brown, "Organic Synthesis via Boranes", John Wiley & Sons, 1975.

Typical representatives of suitable sources of boron compounds are polyalkylmonoboranes and diborane compounds or Lewis base adducts of diborane. Examples of monoboranes include sodium borohydride, potassium borohydride, lithium borohydride, sodium trimethylborohydride, potassium tripropoxy-borohydride, tetramethylammoniumborohydride, triphenylborane, sodium tetraphenylborate, lithium tetraphenylborate, sodium hydrido tris(1-pyrazol) borate, potassium dihydro bis(1-pyrazol)borate, lithium triethylborohydride, lithium tri-sec-butylborohydride, potassium tri-sec-butylborohydride, sodium cyanoborohydride, zinc borohydride, bis(triphenylphosphine) copper (I) borohydride,

potassium tetraphenylborate, lithium phenyltriethylborate, lithium phenyltrimethoxyborate, sodium methoxytriphenylborate, sodium diethylaminotriphenylborate, and sodium hydroxytriphenylborate.

In general, boranes derived from olefin hydroboration are useful. These boranes can be triethylborane, dicyclohexylborane, dihexylborane, diethylborane, ethylborane, boron alkyls such as 9-bora-bicyclo[3.3.1]nonane, diisopinocampheyl borane, dicyclohexyl borane, 2,3-dimethyl-2-butyl borane, 3,5-dimethylborinane and diisoamyl borane, diisopinocampheyl borane, thexylcyclohexyl borane, thexyllimonyl borane, and dinorbornylboron.

Further suitable sources of mono-boranes are reaction products of 1,2-dihydroxybenzenes or 4,6-dimethyl, 1,2-dihydroxybenzenes with boron hydride (boryl catechol or boryl 4,6-dimethylcatechol) and tri-n-butyl boroxine. The boryl compounds in their halogenated state provide a synthetic route to making the functionalizing reagent. Boryl compounds may be reacted in their halo- form with the metal or organo-metallic compounds or complexes. An example of a type of haloboryl compound is the family of halocatecholborane, available commercially. Any halide is suitable, including Cl, Br, and I. The haloboryl compounds in this family may be prepared by reacting an $R(OH)_2$ compound with $BX_3$, where X is a halide.

Examples of structures for sources of haloboryl compounds are represented by the following formulae:

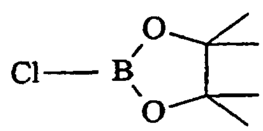

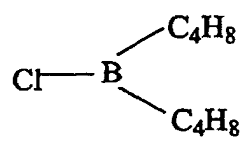

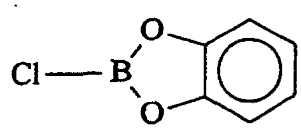

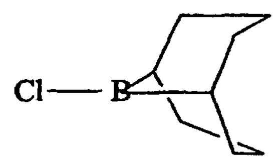

Bis(dioxaborolane) compounds may be conveniently prepared by reduction of halodiaminoboranes using sodium metal, and subsequent reaction with diols in the presence of acid.

Preferred boron containing functionalizing reagents are the branched or unbranched, substituted or unsubstituted pinacol derivatives of mono- or di- boron. Other examples of diboryl adducts include tetrakis dimethylaminodiboron, biscatecholate diboron, and substituted bis-catecholate diboron. Preferred diboryl compounds contain a moiety represented by the following structural formula:

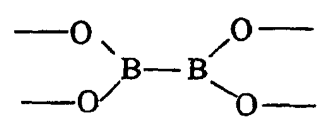

In another embodiment, a preferred diboryl functionalizing reagent is represented by the structure:

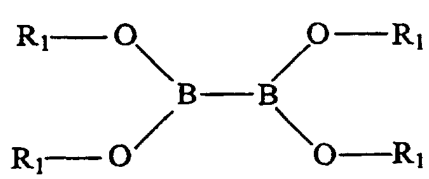

wherein each $R_1$ independently represents a linear or branched, optionally halogen substituted, alkyl group having from 1 to 24 carbon atoms, an alkoxy group containing from 3 to 24 carbon atoms, a cycloaliphatic group containing from 3 to 8 carbon atoms, or an aryl group containing from 5 to 16 atoms, and each of the alkyl, aryl, alkoxy, and cycloaliphatic groups in the aforementioned dioxaborolane compounds may be linear or branched; or substituted with

halogens, such as fluorine or bromine, or alkyl groups having from 1 to 16 carbon atoms, preferably from 1 to 4 carbon atoms, and optionally each $R_1$ group attached to the same boron atom through oxygen atoms may be fused or bridged through any of the aforesaid alkyl, alkoxy, cycloaliphatic or aryl groups.

Examples of preferred bis(dioxaborolane) containing compounds include bis-pinacolate diboron and bis(t-butylcatecholate) diboron.

The functionalizing reagent preferably comprises a diaza-, dithia-, oxa-, aza-borolane, borinane, or diboron compound.

The cyclic hydrocarbon is functionalized at a secondary or aromatic C-H site by simply combining the catalyst, functionalizing reagent and cyclic hydrocarbon under functionalizing reaction conditions. To initiate the reaction by dissociating the ligand from the catalyst, the reaction mixture is heated to any temperature above the temperature at which the catalyst is stored, or room temperature, whichever is less, and below the thermal decomposition temperature of the catalyst or functionalizing reagent. It is desirable that the reagent species employed activates at temperatures above those the reagent would encounter during shipping or storage to ensure storage stability. Accordingly, suitable reaction temperatures range from 70°C to 250°C, more preferably from 100°C to 200°C.

While the molar ratio of ingredients is not critical, it is desirable to use a stoichiometric excess of functionalizing reagent over the metal catalyst (>1:1), and preferably a molar ratio of >10:1, and more preferably >100:1, and most preferably >200:1, respectively. The amount of catalyst is also not particularly limited. However, an amount of catalyst ranging from 0.1 to 10 mole%, preferably from 0.1 to 5 mole%, based on the combined moles of catalyst, cyclic hydrocarbon and functionalizing reagent, will operate to functionalize the cyclic hydrocarbon at the secondary or aromatic C-H bond site.

Other reaction conditions are not particularly limited. The reaction time is not limited, other than the reaction time should be as short as possible to reduce cycle time and increase throughput. Reaction times may range from 0.5 hours to 48 hours. The reaction may be carried out at any desired pressure. Pressures within the range of 101 kPa (a) (0 p.s.i.g.) to 791 kPa (a) 100 p.s.i.g. are suitable.

The reaction between the functionalizing reagent and the cyclic hydrocarbon in the presence of the catalyst may be carried out in any solvent for both the reagent and cyclic hydrocarbon. The process of the present . invention advantageously employs the cyclic hydrocarbon as the solvent for the functionalizing reagent without need to add additional solvent. The catalyst is preferably soluble in the cyclic hydrocarbon.

Once the reaction is complete, the functionalized cyclic hydrocarbon may be separated and isolated from the reaction mixture by distillation, chromatography, or crystallization.

The process of the present invention is capable of converting 5% or more, preferably 50% or more, and more preferably 80% or more, and most preferably 95% or more of the functionalizing reagent.

The process is also catalytic. The process of the present invention enables one to thermally activate the catalyst while achieving 50 or more turnovers. The number of catalyst turnovers is calculated by dividing the moles of product made by the moles of catalyst added to the process. Preferably, the catalyst turns over more than 75 times, more preferably 100 times or more, most preferably 250 times or more.

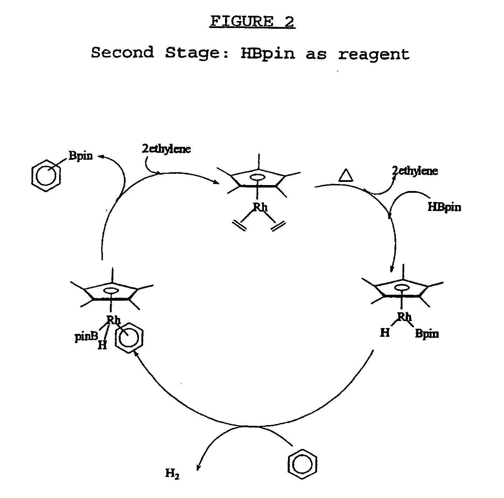

Without being bound to a theory, and for illustration purposes only, it is believed that one possible mechanism for the functionalization of the cyclic hydrocarbon, using $B_2pin_2$ and a $Cp^*Rh(C_2H_2)_2$ ($Cp^*=\eta^5$ $C_5Me_5$) and benzene as illustrative examples of the functionalizing reagent, catalyst, and cyclic hydrocarbon, respectively, proceeds according to the catalytic cycles shown in Figures 1 and 2 of the accompanying drawings, in which: Figure 1 shows First Stage, $B_2pin_2$ as reagent; and Figure 2 shows Second Stage, HBpin as reagent.

Once the cyclic hydrocarbon is functionalized as a boryl adduct of the cyclic hydrocarbon at a secondary or aromatic C-H site, the adduct may be converted into any other hydrocarbyl containing functional group using well known and conventional processes, such as those described in H.C. Brown, "Hydroboration," 1962; R.C. Larock, "Comprehensive Organic Transformations; A Guide To Functional Group Preparations," New York, New York, 1989; and H. C. Brown, "Organic Synthesis via Boranes," New York, New York, 1975. For example, phenols can be manufactured by the oxidation of the phenyl-boryl adduct using hydroxide and peroxide, or the adducts may be carbonylated to an alcohol by reacting the cyclic hydrocarbon-boryl adduct in the presence of carbon monoxide, water and an alkali metal hydroxide such as NaOH or KOH.

Carboxylic acids can be prepared by oxidation of the borane functionalized cyclic hydrocarbon to an alcohol, followed by conventional oxidation of the alcohol to the acid. Amine functional cyclic hydrocarbons can be prepared by reaction of borane functionalized cyclic hydrocarbon with o-hydroxylamine sulfonic acid and chloroamine.

The functionalized borane cyclic hydrocarbons converted to -OH, -COOH, and $-NH_2$ or -NHR bearing compounds may be further converted to cyclic hydrocarbons containing ester, amide, imide, carbonate and polycarbonate, sulfonate, ether, polyether, and glycidyl ether groups.

## Examples

Unless otherwise noted, all manipulations were carried out in an inert atmosphere glovebox or by using standard Schlenk line techniques. Solids were handled in a Vacuum Atmospheres drybox under nitrogen. All solvents were dried over appropriate reagents and distilled under nitrogen before use. $^{1}H$ NMR and $^{13}C$ NMR spectra were recorded on either a General Electric QE-300 or Bruker AM-500 NMR spectrometer, and $^{11}B$ and $^{31}P(H)$ NMR spectra were recorded on an Omega 300 NMR spectrometer. $^{11}B$ and $^{31}P(H)$ chemical shifts are reported in ppm relative to external standards of $BF_3$ $Et_2O$ and 85% $H_3PO_4$, respectively. Proton chemical shifts are reported in ppm relative to residual protiated solvent as internal standard. Elemental analysis were performed by Atlantic Microlabs, Inc., of Norcross, GA. Octane, decane, methylcyclohexane and benzene were distilled from sodium/benzophenone ketyl prior to use. Benzene $D_6$ was dried over sodium/benzophenone ketyl and degassed before use. $B_2pin_2$ and HBpin were purchased from Frontier Science or Aldrich and were used as received. 1-Octene, 1-decene, ethylene, trimethylborate, triethylsilane, vinyltrimethylsilane, anhydrous n-butyl ether, and dodecahydrotriphenylene were purchased from Aldrich and were used as received without further purification. The metal compounds $RhCl_3{\cdot}3H_2O$ and $IrCl_3{\cdot}H_2O$ were obtained from Johnson-Matthey.

$^{31}P$ NMR was operating at 121 MHz, and $^{1}H$ NMR was operating at 300 or 500 Hz. $^{11}B$ NMR was operating at 96.4 MHz. All $^{31}P$ NMR spectra were proton-decoupled. Integration of the $^{31}P$ resonances were carried out on spectra that were acquired with gated decoupling and 10 second delay times between acquisition pulse sequences. $^{1}H$ chemical shifts were measured relative to partially deuterated solvent peaks.

Catalyst Precursor Example 1

This example illustrates the synthesis of one embodiment of the catalyst precursor used to make a catalyst within the scope of the present invention.

$[C_5Me_5RhCl_2]_2$ was synthesized according to the following procedure: A solution of 0.0042 moles of rhodium trichloride hydrate commercially available from Strem Chemicals and 0.007 moles of pentamethylcyclopentadiene commercially available from Aldrich in 40 ml methanol was refluxed under nitrogen for 48 hours with stirring. This procedure is described in C. White, A.Yates, P.M Matilis, Inorg.Synth. 29, 228-234 (1992). $[C_5Me_5RhCl_2]_2$ precipitated out of solution. It was collected and purified by recrystallization in a chloroform/hexane. The yield was 0.93 grams.

Catalyst Example 2

This example illustrates that synthesis of $[(\eta^4\text{-}C_6Me_6)Rh(\eta^5\text{-}C_5Me_5)]$, an embodiment of a catalyst within the scope of the present invention.

$[(\eta^6\text{-}C_6Me_6)Rh(\eta^5\text{-}C_5Me_5)](PF_6)$ catalyst precursor was synthesized according to the following procedure: Following preparation of the $[C_5Me_5RhCl_2]_2$ intermediate as described in example 1, 195 mg, or 0.316mmol, of $[C_5Me_5RhCl_2]_2$ and 233 g, or 1.38 mmol, of hexamethylbenzene was combined with 4.5 ml of trifluoroacetic acid. The mixture was refluxed for 7 hours and then cooled to room temperature. Trifluoroacetic acid was removed under vacuum. The resulting white solid was dissolved in 12 mL of water. The slurry was filtered through a medium fritted funnel. An aqueous solution of $NH_4PF_6$ (345 mg., 2.12 mmol) was added to the filtrate to precipitate the catalyst as an off white solid. The solid was collected by filtration and washed with water (3X7 ml) and $Et_2O$(3X7 ml). The solid was dried under high vacuum and 100°C for 2 hours.

$[(\eta^4\text{-}C_6Me_6)Rh(\eta^5\text{-}C_5Me_5)]$ was synthesized according to the following procedure: 505 mg, 0.731 mmol, of $[(\eta^6\text{-}C_6Me_6)Rh(\eta^5\text{-}C_5Me_5)](PF_6)$ was reduced by combining it with 250 mg, 132 mmol, dicyclopentadienyl cobalt in pentane at room temperature for allowing the stir for 9 hours. The product was isolated by filtration, followed by removal of pentane by evaporation under vacuum.

The yield of the $[(\eta^6\text{-}C_6Me_6)Rh(\eta^5\text{-}C_5Me_5)]$ catalyst product was 96%(255 mg., 0.637 mmol). The spectroscopic characterization was as follows: $^{1}HNMR$ ($C_6D_6$): $\delta$2.05 (s, 6H), 1.64 (s. 15H), 1.42 (s, 6H), and 1.28 (s, 6H).

Functionalization Example 3

A commercially available functionalizing reagent 4,4,5,5-tetramethyl-1,3,2-dioxaborolane was reacted with benzene in the presence of the $[(\eta^6\text{-}C_6Me_6)Rh(\eta^5\text{-}C_5Me_5)]$catalyst as prepared in example 2 to produce a functionalized benzylboryl adduct according to the following equation:

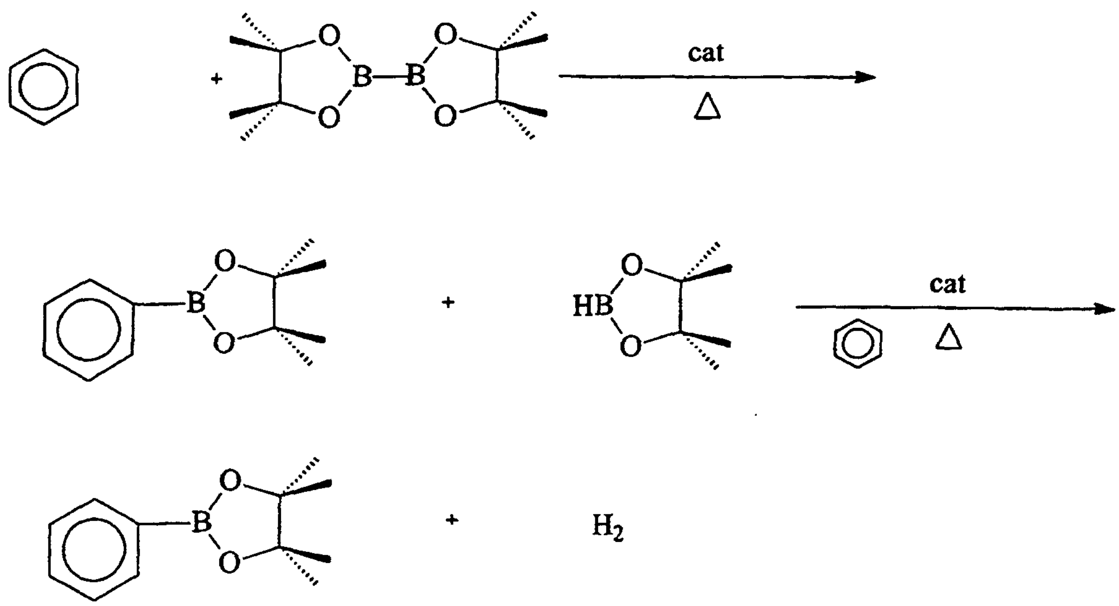


cat =

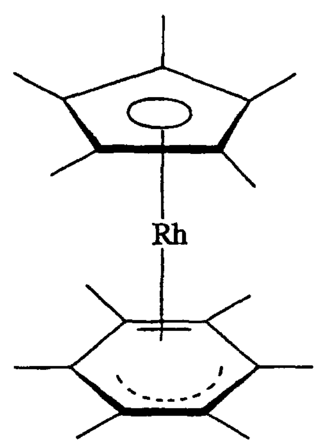

In a dry box, a solution containing 0.66 mg (0.00165 mmol, 0.5 mole% based on moles of all ingredients) of the [(η$^6$-$C_6Me_6$)Rh(η$^5$-$C_5Me_5$)]catalyst and 83 mg (0.33 mmol) $B_2pin_2$ ($B_2pin_2$= 4,4,5,5-tetramethyl-1,3,2-dioxaborolane) obtained from Callery Chemicals in 0.4 ml of dry benzene were combined in a screw-cap NMR sample tube and sealed tightly. The sample was removed from the box and placed in a 150°C oil bath. The solution was heated for 45 hours at 150°C and monitored periodically by $^{11}$B NMR spectroscopy. $^{11}$B NMR spectroscopy showed that HBpin was completely consumed.

The sample was brought into the dry box and a solution of dodecahydrotriphenylene ( 10 mg, 0.042 mmol) in benzene was added by pipette. An aliquot was then removed and analyzed by GC.

The yield of the benzylBpin functionalized product was 82%. 100% of the $B_2pin_2$ was reacted and converted. The catalyst turnover count was 328. The total reaction time was 4.5 hours. Characterization of the benzyl-Bpin adduct product by GC/MS and $^1$HNMR revealed that benzene was functionalization at the aromatic C-H bond.

## Claims

1. A process for functionalizing a cyclic hydrocarbon at a secondary or aromatic C-H cyclic hydrocarbon bond comprising thermally reacting a functionalizing reagent and the cyclic hydrocarbon in the presence of a catalyst, said catalyst comprising:

    a) a source of rhodium;
    b) a source of a 3 to 8, cyclic or non-cyclic, aromatic or non-aromatic, neutral, cationic or anionic, substituted or unsubstituted, electron donor moiety which does not dissociate under thermal reaction conditions; and
    c) a source of ligands capable of formally donating an electron pair to rhodium and which dissociate thermally;

    and wherein said functionalizing reagent comprises a source of boron, and further wherein the catalyst turns over 50 times or more.

2. The process of claim 1, wherein the cyclic hydrocarbon comprises a cycloparaffin.

3. The process of claim 2, wherein said b) moiety:

    (i) lacks aromatic C-H bonds on the moiety directly bonded to the rhodium, or
    (ii) contains sterically hindered aromatic C-H bonds on the moiety directly bonded to the rhodium;

4. The process of claim 1, 2 or 3, wherein the b) moiety comprises an alkyl substituted cyclopentadienyl compound or an unsubstituted cyclopentadienyl compound.

5. The process of claim 1,2, 3 or 4, wherein the c) ligand comprises a linear or branched aliphatic olefinic group having from 2 to 8 carbon atoms.

6. The process of claim 1, 2, 3 or 4, wherein the c) ligand comprises a $C_6$ compound substituted with three to six $C_1$-$C_4$ alkyl groups.

7. The process of any one of the preceding claims, wherein said functionalizing reagent comprises a source of boron alkyl, boron aryl, organoboron hydride, or organoboron halide compounds.

8. The process of any one of the preceding claims, wherein the functionalizing reagent and the cyclic hydrocarbon are reacted in the presence of said catalyst at a temperature ranging from 70°C to 250°C.

9. The process of any one of the preceding claims, wherein the molar ratio of functionalizing reagent to catalyst is greater than 10:1.

10. The process of any one of the preceding claims, wherein 80 % or more of thefunctionalizing reagent is converted.

## Patentansprüche

1. Verfahren zur Funktionalisierung eines cyclischen Kohlenwasserstoffes an einer sekundären oder aromatischen C-H-Bindung eines cyclischen Kohlenwasserstoffs, umfassend das thermische Umsetzen eines Funktionalisierungsreagenzes und des cyclischen Kohlenwasserstoffes in Gegenwart eines Katalysators, welcher Katalysator umfaßt:

    a) eine Rhodiumquelle;
    b) eine Quelle eines 3 bis 8, cyclischen oder nicht cyclischen, aromatischen oder nicht aromatischen, neutralen, kationischen oder anionischen, substituierten oder unsubstituierten Elektronendonorrestes, welcher unter thermischen Reaktionsbedingungen nicht dissoziiert; und
    c) eine Quelle von Liganden, die fähig sind, formal ein Elektronenpaar an Rhodium abzugeben, und welche thermisch dissoziieren;

    und wobei das genannte Funktionalisierungsreagenz eine Borquelle umfaßt und ferner worin der Katalysator über 50 Mal oder darüber verwendet wird.

**2.** Verfahren nach Anspruch 1, worin der cyclische Kohlenwasserstoff ein Cycloparaffin umfaßt.

**3.** Verfahren nach Anspruch 2, worin der b) Rest:

(i) keine aromatischen C-H-Bindungen am direkt an das Rhodium gebundenen Rest aufweist oder
(ii) sterisch gehinderte aromatische C-H-Bindungen am direkt an das Rhodium gebundenen Rest enthält.

**4.** Verfahren nach Anspruch 1, 2 oder 3, wobei der b) Rest eine alkylsubstituierte Cyclopentadienylverbindung oder eine unsubstituierte Cyclopentadienylverbindung umfaßt.

**5.** Verfahren nach Anspruch 1, 2, 3 oder 4, worin der c) Ligand eine lineare oder verzweigte aliphatische Olefingruppe mit 2 bis 8 Kohlenstoffatomen umfaßt.

**6.** Verfahren nach Anspruch 1, 2, 3 oder 4, worin der c) Ligand eine $C_6$-Verbindung umfaßt, die mit 3 bis 6 $C_1$-$C_4$-Alkylgruppen substituiert ist.

**7.** Verfahren nach einem der vorstehenden Ansprüche, worin das funktionalisierende Reagenz eine Quelle von Boralkyl, Boraryl, Organoborhydrid oder Organoborhalogenidverbindungen umfaßt.

**8.** Verfahren nach einem der vorstehenden Ansprüche, worin das funktionalisierende Reagenz und der cyclische Kohlenwasserstoff in Gegenwart des Katalysators bei einer Temperatur von 70°C bis 250°C umgesetzt werden.

**9.** Verfahren nach einem der vorstehenden Ansprüche, worin das Molverhältnis von funktionalisierendem Reagenz zum Katalysator mehr als 10:1 beträgt.

**10.** Verfahren nach einem der vorstehenden Ansprüche, worin 80% oder mehr des funktionalisierenden Reagenzes umgewandelt werden.

## Revendications

**1.** Procédé pour fonctionnaliser un hydrocarbure cyclique au niveau d'une liaison hydrocarbure cyclique C-H secondaire ou aromatique, qui comprend l'étape qui consiste à faire réagir thermiquement un réactif de fonctionnalisation et l'hydrocarbure cyclique en présence d'un catalyseur, ledit catalyseur comprenant:

a) une source de rhodium,
b) une source de 3 à 8 fractions donneuses d'électrons, cycliques ou non cycliques, aromatiques ou non aromatiques, neutres, cationiques ou anioniques, substituées ou non substituées, qui ne se dissocient pas dans des conditions de réaction thermique et
c) une source de ligands qui peut donner formellement une paire d'électrons au rhodium et qui se dissocie thermiquement,

ledit réactif de fonctionnalisation comprenant une source de bore et le catalyseur tournant en outre jusqu'à 50 fois ou davantage.

**2.** Procédé selon la revendication 1, dans lequel l'hydrocarbure cyclique comprend une cycloparaffine.

**3.** Procédé selon la revendication 2, dans lequel ladite fraction b):

(i) n'a pas de liaisons C-H aromatiques sur la fraction directement reliée au rhodium ou
(ii) contient des liaisons C-H aromatiques stériquement gênées sur la fraction directement reliée au rhodium.

**4.** Procédé selon les revendications 1, 2 ou 3, dans lequel la fraction b) contient un composé de cyclopentadiényle substitué avec un groupe alkyle ou un composé de cyclopentadiényle non substitué.

**5.** Procédé selon les revendications 1, 2, 3 ou 4, dans lequel le ligand c) contient un groupe oléfinique aliphatique linéaire ou ramifié qui contient entre 2 et 8 atomes de carbone.

6. Procédé selon les revendications 1, 2, 3 ou 4, dans lequel le ligand c) contient un composé en $C_6$ substitué avec trois à six groupes alkyle en $C_1$-$C_4$.

7. Procédé selon l'une quelconque des revendications précédentes, dans lequel ledit réactif de fonctionnalisation contient une source d'alkylbore, d'arylbore, d'hydrure d'organobore ou des composés d'halogénure d'organobore.

8. Procédé selon l'une quelconque des revendications précédentes, dans lequel on fait réagir le réactif de fonctionnalisation et l'hydrocarbure cyclique en présence dudit catalyseur à une température comprise entre 70°C et 250°C.

9. Procédé selon l'une quelconque des revendications précédentes, dans lequel le rapport molaire entre le réactif de fonctionnalisation et le catalyseur est supérieur à 10:1.

10. Procédé selon l'une quelconque des revendications précédentes, dans lequel 80 % ou plus du réactif de fonctionnalisation sont convertis.

FIGURE 1

First Stage: $B_2pin_2$ as reagent:

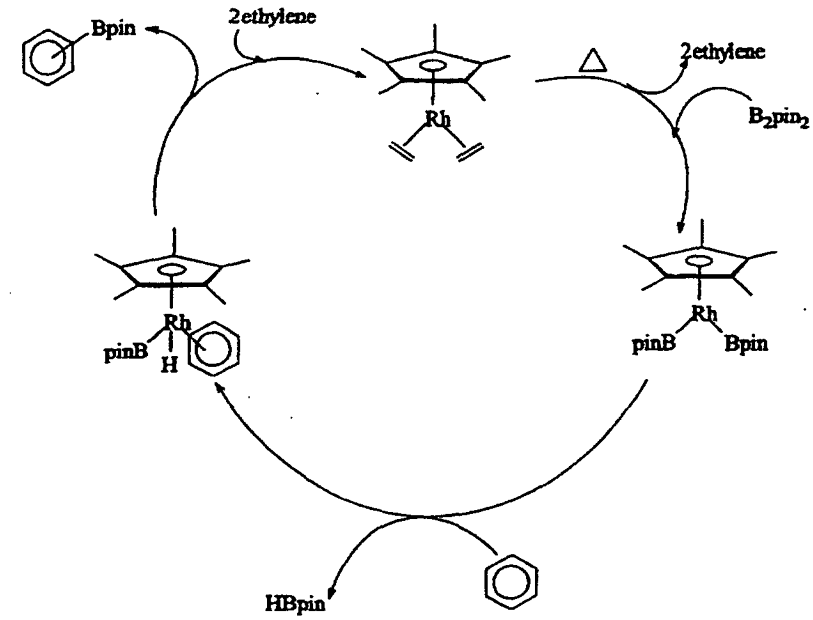

FIGURE 2

Second Stage: HBpin as reagent